# EUROPEAN PATENT APPLICATION

(11) **EP 4 572 088 A1**
(43) Date of publication of application: **18.06.2025**
(21) Application number: 23863453.9
(22) Date of filing: 05.09.2023
(51) Int. Cl.: H02J 50/00, H01F 27/24, H01F 38/14, B60L 53/12

(54) **MAGNETIC CORE STRUCTURE FOR WIRELESS POWER TRANSFER, AND WIRELESS POWER TRANSFER DEVICE AND METHOD USING CORE STRUCTURE**

(30) Priority: 05.09.2022 KR 20220111837
(71) Applicant: Hyundai Motor Company, Seoul 06797 (KR); Kia Corporation, Seoul 06797 (KR)
(72) Inventor: CHI, Soung Hwan, Hwaseong-si, Gyeonggi-do 18280 (KR); SEONG, Jae Yong, Hwaseong-si, Gyeonggi-do 18280 (KR)
(74) Representative: Isarpatent
(86) International application number: PCT/KR2023/013213
(87) International publication number: WO 2024/053981

(57) **Abstract**

A magnetic core structure provided together with a primary coil for wireless power transfer (WPT) includes: a first structure which has a structure extending in a first axis direction in a first area including the center of the primary coil and protrudes therefrom; a second structure which is spaced apart from the first structure in a second axis direction, has a structure extending in the first axis direction, and protrudes therefrom; and a support structure which has the same magnetic characteristic as the first structure and the second structure and supports the first structure and the second structure.

## Description

### TECHNICAL FIELD

The present disclosure relates to a magnetic core structure provided along with a coil of a device for wireless power transfer (WPT). More particularly, the present disclosure relates to a magnetic core structure increasing a degree of freedom in a power transfer range and a coil alignment of a power transmission coil and a power reception coil, and a wireless power transfer device and method employing the magnetic core structure.

### BACKGROUND ART

An electric vehicle (EV) is driven by an electric motor by power stored in a battery, and produces less pollution such as exhaust gas and noise compared with a conventional gasoline engine vehicle, and have advantages of fewer faults, a longer life span, and simplified driving operations.

The EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

An electric vehicle charging system may be defined as a system that charges the battery mounted in the electric vehicle using electric power obtained from a commercial power grid or stored in an energy storage device. Such an electric vehicle charging system may have various forms depending on a type of the electric vehicle. For example, the electric vehicle charging system may include a conductive charging system using a cable or a non-contact wireless power transfer system.

During a charging session, a reception pad of a vehicle assembly (VA) mounted on the electric vehicle may form an inductive resonance coupling with a transmission pad of a ground assembly (GA) installed at a charging station or a charging spot and may charge the battery of the EV using electric power transferred from the ground assembly through the inductive resonance coupling.

Meanwhile, structures of the transmission pad and the reception pad may be critical factors for ensuring a high power transfer efficiency in the magnetic resonance type wireless power transfer system. In particular, in a typical configuration of the transmission pad or the reception pad including a ferrite structure facilitating the wireless power transfer and a coil wound around the ferrite structure, the power transfer efficiency may vary depending on the ferrite structure and/or the coil structure.

Accordingly, there is a need for a core structure that may improve the power transfer efficiency in the wireless power transfer system.

### DISCLOSURE OF INVENTION

### TECHNICAL PROBLEM

An inductive wireless power transfer may be implemented by an arrangement of a very simple structure, but there is a need for a technology that can enhance a degree of freedom in a power transfer range and a coil alignment between a transmission coil/primary coil and a reception coil/secondary coil.

To solve the above problem, one object of the present disclosure is to provide a magnetic structure enabling an efficient power transfer in the inductive wireless power transfer system for electric vehicles by reducing a performance degradation that may be caused by deviations in a power transfer distance between the primary coil and the secondary coil and an alignment between the coils.

Another object of the present disclosure is to provide a magnetic structure enhancing the degree of freedom in the power transfer distance between the primary coil and the secondary coil and an alignment position of the secondary coil relative to the primary coil.

Another object of the present disclosure is to provide a magnetic structure equipped with a magnetic core with two wall-shaped structures in a space surrounded by the primary coil, thereby adjusting a mutual inductance of the primary coil and the secondary coil and a coupling coefficient between the coils and improving a power transfer efficiency in a misaligned state.

Another object of the present disclosure is to provide a magnetic structure in which the magnetic core with the wall-shaped structures is disposed at a maximum available misalignment position to increase the coupling coefficient at misaligned positions without reducing the coupling coefficient at an aligned position, so that the power transfer efficiency is improved at various misaligned positions within a maximum available misalignment range.

Another object of the present disclosure is to provide a wireless power transfer (WPT) device having an optimized arrangement of a novel magnetic core structure and exhibiting an enhanced power transfer efficiency, and a wireless power transfer method using the wireless power transfer device.

### TECHNICAL SOLUTION

According to an aspect of an exemplary embodiment to achieve the objects, a magnetic core structure provided with a primary coil for wireless power transfer (WPT), may include: a first structure configured to protrude in a first space including a center of the primary coil and extend in a first axis direction; a second structure spaced apart from the first structure in a second axis direction and configured to protrude in a same direction as the first structure and extend in the first axis direction; and a support structure configured to support the first structure and the second structure and having a same magnetic property as the first structure and the second structure.

The first structure and the second structure may be arranged such that a separation distance between the first structure and the second structure is maximized within the first space.

The first structure and the second structure may be arranged symmetrically with respect to a center of the primary coil.

The first structure and the second structure may be configured to protrude in a third axis direction by more than a first reference value.

The first reference value may be 50 mm.

The first structure and the second structure may have a width in a second axis direction greater than or equal to a second reference value.

The second reference value may be 25 mm.

Alternatively, the second reference value may be 50 mm.

The primary coil may be arranged to surround the first structure and the second structure. The primary coil may include a primary coil wire wound by one or more turns. The primary coil wire may have a predetermined height in a third axis direction. The predetermined height may be an even height.

The primary coil may be arranged to surround the first structure and the second structure. The primary coil may include a primary coil wire wound by one or more turns. The closer to the center of the primary coil, the higher in a third axis direction a turn of the primary coil wire may be located.

The primary coil may be arranged to surround the first structure and the second structure. The primary coil may include a primary coil wire wound by one or more turns. The closer to the center of the primary coil, the lower in a third axis direction a turn of the primary coil wire may be located.

According to another aspect of an exemplary embodiment, a wireless power transfer device provided to transmit power wirelessly to a reception pad including a secondary coil includes: a primary coil; a first magnetic structure configured to protrude in a first space including a center of the primary coil and extend in a first axis direction; a second magnetic structure spaced apart from the first magnetic structure in a second axis direction and configured to protrude in a same direction as the first magnetic structure and extend in the first axis direction; a support magnetic structure configured to support the first magnetic structure and the second magnetic structure and having a same magnetic property as the first magnetic structure and the second magnetic structure; and a housing configured to support the primary coil, the first magnetic structure, the second magnetic structure, and the support magnetic structure.

The first magnetic structure and the second magnetic structure may be arranged such that a separation distance between the first magnetic structure and the second magnetic structure is maximized within the first space.

The first magnetic structure and the second magnetic structure may be arranged symmetrically with respect to a center of the primary coil.

The first magnetic structure and the second magnetic structure may be configured to protrude in a third axis direction by more than a first reference value.

The first magnetic structure and the second magnetic structure may have a width in a second axis direction greater than or equal to a second reference value.

According to another aspect of an exemplary embodiment, a method of wirelessly transmitting power from a transmission pad including a primary coil to a reception pad including a secondary coil includes: providing a magnetic core structure comprising a first magnetic structure configured to protrude within a first space including a center of the primary coil and extend in a first axis direction, and a second magnetic structure spaced apart from the first magnetic structure in a second axis direction and configured to protrude in the same direction as the first magnetic structure and extend in the first axis direction; positioning a center of the secondary coil within a predetermined offset range from the center of the primary coil; and supplying input power to the primary coil and allowing to be wirelessly transferred to the secondary coil.

The first magnetic structure and the second magnetic structure may be configured to protrude in a third axis direction by more than a first reference value.

The method may further include: providing the primary coil surrounding the first magnetic structure and the second magnetic structure and the primary coil including a primary coil wire wound by one or more turns having a predetermined height in a third axis direction. The predetermined height may be an even height.

The method may further include: providing the primary coil surrounding the first magnetic structure and the second magnetic structure and the primary coil including a primary coil wire wound by one or more turns the closer to the center of the primary coil, the higher in a third axis direction a turn of the primary coil wire is located.

The method may further include: providing the primary coil surrounding the first magnetic structure and the second magnetic structure and the primary coil including a primary coil wire wound by one or more turns the closer to the center of the primary coil, the lower in a third axis direction a turn of the primary coil wire is located.

### ADVANTAGEOUS EFFECTS

According to an exemplary embodiment of the present disclosure, provided is the magnetic structure enabling an efficient power transfer in the inductive wireless power transfer system for electric vehicles by reducing a performance degradation that may be caused by deviations in the power transfer distance between the primary coil and the secondary coil and the alignment between the coils.

According to an exemplary embodiment of the present disclosure, provided is the magnetic structure enhancing the degree of freedom in the power transfer distance between the primary coil and the secondary coil and the alignment position of the secondary coil relative to the primary coil.

According to an exemplary embodiment of the present disclosure, provided is the magnetic structure equipped with the magnetic core with two wall-shaped structures in the space surrounded by the primary coil, thereby adjusting the mutual inductance of the primary coil and the secondary coil and the coupling coefficient between the coils and improving the power transfer efficiency in the misaligned state.

According to an exemplary embodiment of the present disclosure, provided is the magnetic structure in which the magnetic core with the wall-shaped structures is disposed at a maximum available misalignment position to increase the coupling coefficient at misaligned positions without reducing the coupling coefficient at an aligned position, so that the power transfer efficiency is improved at various misaligned positions within a maximum available misalignment range.

According to an exemplary embodiment of the present disclosure, provided is the wireless power transfer (WPT) device having an optimized arrangement of a novel magnetic core structure and exhibiting an enhanced power transfer efficiency, and a wireless power transfer method using the wireless power transfer device.

### DESCRIPTION OF DRAWINGS

FIG. 1 is an illustration of a wireless power transfer system to which an exemplary embodiment of the present disclosure is applicable;
FIG. 2 is a circuit diagram of an equivalent circuit of an electric vehicle wireless charging circuit according to an exemplary embodiment of the present disclosure;
FIG. 3 shows an equivalent circuit of a single-phase to single-phase wireless power transfer (WPT) system according to an exemplary embodiment of the present disclosure;
FIG. 4 is a conceptual cross-sectional view and an elevation view of a conventional power transmission pad which may be a comparative example of the present disclosure;
FIG. 5 is a perspective view illustrating a power transmission pad and a power reception pad including a magnetic core structure according to an exemplary embodiment of the present disclosure;
FIG. 6 is a front view and a lateral view illustrating the power transmission pad and the power reception pad including the magnetic core structure according to an exemplary embodiment of the present disclosure;
FIG. 7 is a conceptual planar view illustrating the power transmission pad and the power reception pad including the magnetic core structure according to an exemplary embodiment of the present disclosure;
FIG. 8 is a perspective view illustrating the power transmission pad and the power reception pad including the magnetic core structure according to another exemplary embodiment of the present disclosure;
FIG. 9 is a front view and a lateral view illustrating the power transmission pad and the power reception pad including the magnetic core structure according to another exemplary embodiment of the present disclosure;
FIG. 10 is a perspective view illustrating the power transmission pad and the power reception pad including the magnetic core structure according to yet another exemplary embodiment of the present disclosure;
FIG. 11 is a front view and a lateral view illustrating the power transmission pad and the power reception pad including the magnetic core structure according to yet another exemplary embodiment of the present disclosure;
FIG. 12 is a flowchart conceptually illustrating a wireless power transfer method according to another exemplary embodiment of the present disclosure; and
FIG. 13 is a block diagram illustrating a generalized configuration of hardware included in the wireless power transmission pad and/or the wireless power reception pad or associated with the wireless power transmission pad and/or the wireless power reception pad to control a sequence for the wireless power transfer.

### BEST MODE

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": A device providing the contactless coupling to the secondary device. In other words, the primary device may be a device external to an EV. When the EV is receiving power, the primary device may operate as the source of the power to be transferred. The primary device may include the housing and all covers.

"Secondary device": A device mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

The electric vehicle charging system may include a conductive charging system using a cable or a non-contact wireless power transfer system, but is not limited thereto. The electric vehicle charging system may be defined as a system that charges the battery mounted in the electric vehicle using electric power obtained from a commercial power grid or stored in an energy storage device and may have various forms depending on a type of the electric vehicle.

SAE TIR J2954 standard, which is one of the most representative industrial standards for wireless charging, establishes industry-standard specification guidelines that define acceptable criteria for interoperability, electromagnetic compatibility, minimum performance, safety and testing for wireless charging of light-duty electric and plug-in electric vehicles.

As an example of the wireless charging system, the wireless charging system (WCS) according to the J2954 standard may include a grid interface, a high frequency power inverter, power transfer coils, a filter, a rectifier, an optional regulator, and communication circuits between the vehicle energy charging/storage system and a grid connected power inverter. The grid interface may be similar to a conventional EVSE connection for single or three-phase AC power.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

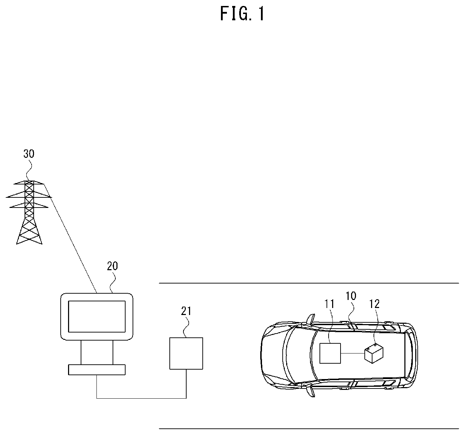

FIG. 1 is an illustration of a wireless power transfer system to which an exemplary embodiment of the present disclosure may be applied.

As shown in FIG. 1, the wireless power transfer may be performed by at least one component of an electric vehicle (EV) 10 and a charging station 20 and may be used for transferring electric power to the EV 10 without any conductive wiring.

The EV 10 according to an exemplary embodiment of the present disclosure may include a hybrid electric vehicle (HEV) having an electric motor as well as an internal combustion engine, and may include not only an automobile but also a motorcycle, a cart, a scooter, and an electric bicycle.

The EV 10 may generally be defined as a vehicle that supplies an electric power derived from a rechargeable energy storage such as a battery 12 to an electric motor in a power train system of the EV 10.

The EV 10 may include a power reception pad 11 having a reception coil suitable for receiving the electric power for charging the battery 12 by the wireless power transfer and may include a plug receptacle or inlet suitable for receiving the electric power for charging the battery 12 by the conductive charging. In particular, the EV 10 configured for conductively charging the battery 12 may be referred to as the plug-in electric vehicle (PEV).

The charging station 20 may be connected to the power grid 30 or a power backbone, and may provide the AC power received from the power grid 30 or the power backbone to a power transmission pad 21 having a transmission coil through a power link.

The charging station 20 may communicate with the power grid 300, or an infrastructure management system or an infrastructure server managing the power grid, and may be configured to perform wireless communications with the EV 10. The wireless communications may be performed through Bluetooth, Zigbee, cellular, wireless local area network (WLAN), or the like.

The charging station 20 may be located at various places including a parking area of the owner's house of the EV 10, a parking lot for charging the EV at a gas station, a parking lot at a shopping center or a workplace, or the like, but is not limited thereto.

The wireless power transfer to the battery 12 of the EV 10 may be performed as follows. First, the power reception pad 11 of the EV 10 is disposed in an energy field over the power transmission pad 21. Then the reception coil in the power reception pad 11 and the transmission coil in the power transmission pad 21 may be coupled to and interact each other. An electromotive force may be induced in the power reception pad 11 as a result of the coupling or the interaction, and the battery 12 may be charged by the induced electromotive force.

The charging station 20 and the power transmission pad 21 as a whole or in part may be referred to as the supply power circuit (SPC) or the ground assembly (GA), of which meaning and function were defined above.

Also, the power reception pad 11 along with all or some of the other internal components of the EV 10 may be referred to as the EV power circuit (EVPC) or the vehicle assembly (VA), of which meaning and function were defined above.

Here, each of the power transmission pad 21 and the power reception pad 11 may be configured as a non-polarized or polarized pad.

The non-polarized pad may have one pole in a center of the pad and an opposite pole around its periphery. In this case, the magnetic flux may be formed to exit from the pole in the center of the pad and return to the pole in the periphery from outside of the pad.

The polarized pad may have two poles arranged symmetrically at opposite positions on the pad. In this case, the magnetic flux may be formed according to the orientation of the pad.

In the present specification, the power transmission pad 21 and the power reception pad 11 may be collectively referred to as wireless charging pads.

In an exemplary embodiment of the present disclosure, Y-axis of a Cartesian coordinate system may be set to point to the front or rear of the vehicle, X-axis may be set to point to the right or left of the vehicle, and Z-axis may be set to point to the upward or downward direction. The magnetic center of a coil of the power transmission pad 21 or the power reception pad 11 may be defined as x=0 and y=0, and a ground surface may be defined as z=0.

In another exemplary embodiment of the present disclosure, the X-axis may be set to point to the front or rear of the vehicle, and the Y-axis may be set to point to the right or left of the vehicle.

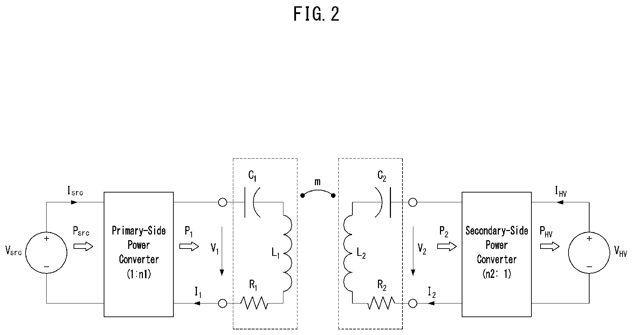

FIG. 2 is a circuit diagram of an equivalent circuit of an electric vehicle wireless charging circuit according to an exemplary embodiment of the present disclosure.

A left portion of the circuit shown in FIG. 2 may be interpreted as a representation of all or part of a power supply Vsrc supplied from the power grid and a charging station 20 including the power transmission pad 21, and a right portion of the circuit shown in FIG. 2 may be interpreted as a representation of all or part of the electric vehicle including the power reception pad and the battery.

The left portion of the circuit shown in FIG. 2 may provide an output power Psrc corresponding to the power source Vsrc supplied from the power grid to a primary-side power converter. The primary-side power converter may perform a frequency-conversion and AC-DC or DC-to-AC conversion of the power Psrc to output a converted output power P1 to a transmission coil L1, so that the transmission coil L1 may generate an electromagnetic field at a desired operating frequency.

The primary-side power converter may include an AC-DC converter configured to convert the power Psrc which is an AC power supplied from the power grid into a DC power and a low-frequency (LF) converter configured to convert the DC power into an AC power having an operating frequency suitable for the wireless charging. For example, the operating frequency for the wireless charging may be determined to be in a frequency range 80-90 kHz, but is not limited thereto.

The power P1 output by the primary-side power converter may be supplied to a circuit including the transmission coil L1, a first capacitor C1, and a first resistor R1. In particular, a capacitance of the first capacitor C1 may be determined as a value establishing the operating frequency suitable for the wireless charging together with the transmission coil L1. The first resistor R1 may represent a power loss in the transmission coil L1 and the first capacitor C1.

Further, the transmission coil L1 may be electromagnetically coupled with a reception coil L2 by a coupling coefficient m so that a power P2 is transferred to the reception coil L2 or the power P2 is induced in the reception coil L2. Therefore, the meaning of power transfer in the present disclosure may be used interchangeably with the meaning of power induction.

The power P2 induced in or transferred to the reception coil L2 may be provided to a secondary-side power converter. Particularly, a capacitance of a second capacitor C2 may be determined as a value establishing the operating frequency suitable for the wireless charging together with the reception coil L2. A second resistor R2 may represent a power loss in the reception coil L2 and the second capacitor C2.

The secondary-side power converter may include an AC-DC converter configured to convert the supplied power P2 of the operating frequency to a DC power having a voltage level suitable for the battery VHV of the EV.

The electric power PHV converted from the power P2 supplied to the secondary-side power converter may be used for charging the battery VHV mounted inside the EV.

The right portion of the circuit shown in FIG. 2 may further include a switch for selectively connecting or disconnecting the reception coil L2 with the battery VHV.

Resonance frequencies of the transmission coil L1 and the reception coil L2 may be similar or identical to each other, and the reception coil L2 may be positioned in the electromagnetic field generated by the transmission coil L1.

It should be noted that the circuit of FIG. 2 is illustrative for the WPT in the EV WPT system used for exemplary embodiments of the present disclosure, and the present disclosure is not limited to the circuit illustrated in FIG. 2.

On the other hand, since the power loss may increase with a distance between the transmission coil L1 and the reception coil L2, it may be an important factor to set the relative positions of the transmission coil L1 and the reception coil L2 appropriately.

The transmission coil L1 may be included in the transmission pad 21 shown in FIG. 1, and the reception coil L2 may be included in the reception pad 11 shown in FIG. 1. Additionally, the transmission coil may be referred to as the primary coil or a ground assembly (GA) coil, and the reception coil may be referred to as the secondary coil or a vehicle assembly (VA) coil. Therefore, a positional alignment between the transmission pad and the reception pad or a positional alignment between the EV and the transmission pad may be an important factor also.

The positional alignment between the transmission pad 21 and the reception pad 11 in the electric vehicle 10 shown in FIG. 1 may correspond to the term "alignment" described above and therefore may be defined as the positional alignment between the SPC/GA and the EVPC/VA and is not limited to the positional alignment of the transmitting pad 21 and the reception pad 11.

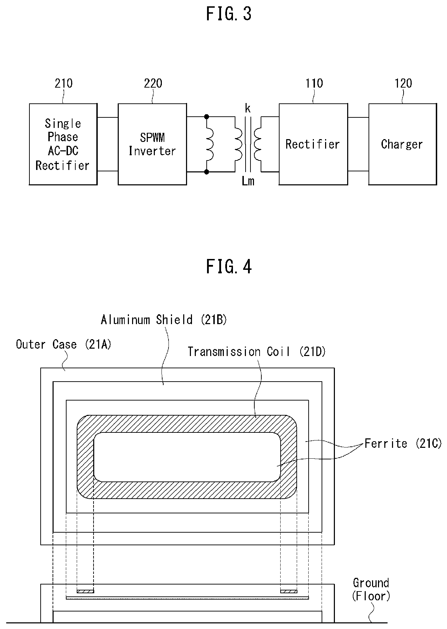

The transmission pad 21 may be positioned below the ground surface, may be positioned on the ground surface, or may be positioned below the ground surface with its top surface being exposed over the ground surface. At this time, as shown in FIGS. 2 and 3, the x-axis may indicate the front-to-back direction of the vehicle, the y-axis may indicate the left--right direction of the vehicle, and the z-axis may indicate the up-and-down direction of the vehicle.

In addition, the reception pad 11 of the EV may be defined by different categories according to its height (defined in the z-direction) measured from the ground surface. For example, the reception pad 11 having a height of about 100-150 millimeters (mm) from the ground surface may be categorized into a class 1. The reception pad 11 having a height of about 140-210 mm may be categorized into a class 2. The reception pad 11 having a height of about 170-250 mm may be categorized into a class 3. The reception pad may support only some of the classes 1 through 3. For example, only the class 1 may be supported by the reception pad 11, or the class 1 and 2 may be supported by the reception pad 11.

The height of the reception pad measured from the ground surface may correspond to the previously defined term "vehicle magnetic ground clearance."

Meanwhile, a vertical position (i.e., position in the z-direction) of the power transmission pad 21 may be determined to be disposed between the maximum class and the minimum class supported by the power reception pad 11. For example, in case that the reception pad supports only the class 1 and 2, the vertical position of the power transmission pad 21 may be in a range between about 100 and 210 mm with respect to the power reception pad 11.

In addition, a gap between the center of the power transmission pad 21 and the center of the power reception pad 11 may be determined to be disposed within the limits of the horizontal and vertical directions (defined in the x- and y-directions). For example, the gap (e.g., Δy) may be determined to be within ±75 mm in a lateral direction (defined in the y-direction), and within ±100 mm in the longitudinal direction (defined in the x-direction).

The relative positions of the power transmission pad 21 and the power reception pad 11 may be varied in accordance with experimental results, and it should be noted that the numerical values mentioned above are provided as examples.

Although the alignment between the pads has been described above on the assumption that each of the transmission pad 21 and the reception pad 11 includes a coil, the alignment between the pads may be defined more specifically by an alignment between the transmission coil (or GA coil) and the reception coil (or VA coil) included in the transmission pad 21 and the reception pad 11, respectively.

FIG. 3 shows an equivalent circuit of a single-phase to single-phase wireless power transfer (WPT) system according to an exemplary embodiment of the present disclosure.

A magnetic/inductive coupling or resonance structure formed between the primary coil and the secondary coil according to various embodiments of the present disclosure may be represented equivalently by a transformer shown in FIG. 3.

Referring to FIG. 3, a single-phase rectifier 210 and a sinusoidal pulse width modulation (SPWM) inverter 220 for applying an alternating current power to the primary coil may be disposed on a side of the primary coil.

In addition, a rectifier 110 and a charger 120 for transferring the power from the secondary coil to the load or battery may be disposed on a side of the secondary coil.

The wireless power transfer system according to an exemplary embodiment of the present disclosure may include a power transfer circuit. The power transfer circuit shown in FIG. 3 may include a structure comprised of the single-phase rectifier 210 and the SPWM inverter 220 on the primary coil side as a technical feature.

The power transfer circuit according to an exemplary embodiment of the present disclosure shown in FIG. 3 may employ a proportional integral (PI) control scheme based on a measurement on the single-phase rectifier 210, as a technical feature, to control the single-phase rectifier 210 and the SPWM inverter 220 applying an alternating current power to the primary coil.

The SPWM inverter 220 may receive an output of the single-phase rectifier 210 and generate the alternating current power to supply the alternating current power as an output to the primary coil.

Meanwhile, an alternating current power rectified by the rectifier 110 may be supplied to the battery by the charger 120 to recharge the battery.

FIG. 4 is a conceptual cross-sectional view and an elevation view of a conventional power transmission pad which may be a comparative example of the present disclosure.

FIG. 4 shows a transmission coil 21D that may be included in the transmission pad 21 in a device performing the wireless power transfer by a single-phase operation, for example, in the device shown in FIG. 3. The transmission pad 21 shown in FIG. 4 may support the single-phase operation mode. If the reception pad 11 includes the reception coil (not shown) having a shape corresponding to the transmission coil of FIG. 4, the reception pad 11 can perform the wireless power reception in the single-phase operation mode. The configuration of the coil and hardware of the reception pad 11 needed for the single-phase operation mode may be easily implemented by a person skilled in the art by modifying the transmission pad of FIG. 4, and detailed description thereof is omitted for simplicity.

Referring to FIG. 4, the power transmission pad 21 may include an outer case 21A forming an outer structure of the power transmission pad 21, an aluminum shield 21B having a shape of a planar plate and installed inside the outer case 21A, and a ferrite pad 21C installed on or above the aluminum shield 21B, and a transmission coil 21D installed on or above ferrite pad 21C. Here, "on or above" means an upward direction relative to the ground where the power transmission pad 21 is installed.

Here, the ferrite which is used for the ferrite pad 21C is a magnetic material containing iron oxide and can affect the wireless power transfer by reducing a magnetic resistance and facilitating a flow of magnetic flux.

Hereinbelow, the configuration of the device according an exemplary embodiment of the present disclosure will be described in a viewpoint of aspects different from the conventional power transmission pad shown in FIG. 4.

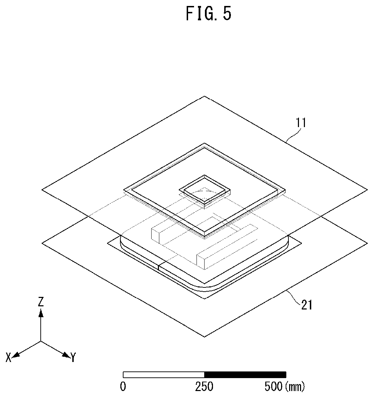

FIG. 5 is a perspective view illustrating the power transmission pad and the power reception pad including a magnetic core structure according to an exemplary embodiment of the present disclosure.

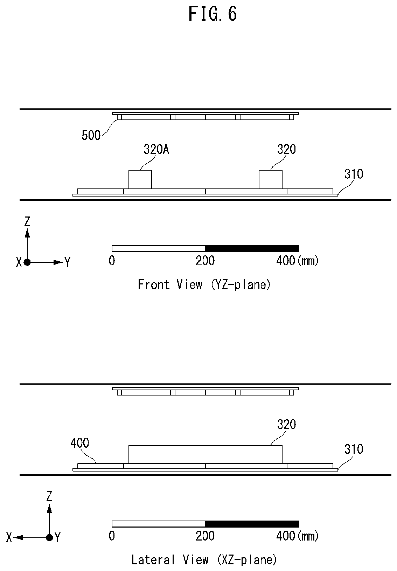

FIG. 6 is a front view and a lateral view illustrating the power transmission pad and the power reception pad including the magnetic core structure according to an exemplary embodiment of the present disclosure.

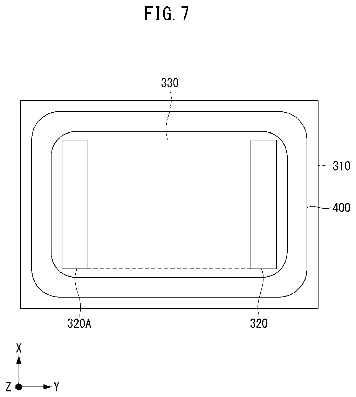

FIG. 7 is a conceptual planar view illustrating the power transmission pad and the power reception pad including the magnetic core structure according to an exemplary embodiment of the present disclosure.

Referring to FIGS. 5-7, the power transmission pad or device 21 according to an exemplary embodiment of the present disclosure may include a primary coil 400, a magnetic core structure 310, 320, and 320A, and a housing.

The housing may support the primary coil 400 and the magnetic core structure designated by reference numerals 310, 320, and 320A.

The power reception pad or device 11 according to an exemplary embodiment of the present disclosure may include a secondary coil 500.

The magnetic core structure 310, 320, or 320A provided with the primary coil 400 for the wireless power transfer (WPT) according to an exemplary embodiment of the present disclosure may include: a first structure 320 formed on a support structure 310 to protrude within a first space 330 including a center of the primary coil 400 and extending in a first axis direction; a second structure 320A spaced apart from the first structure in a second axis direction, protruding in the same direction as the protrusion direction of the first structure, and extending in the first axis direction; and the support structure 310 supporting the first structure 320 and the second structure 320A and having same magnetic properties as the first structure 320 and the second structure 320A.

The support structure 310, the first structure 320, and the second structure 320A may be formed of magnetic materials. Examples of the magnetic materials may include the ferrite described above, but the present disclosure is not limited to a particular material.

The first structure 320 and the second structure 320A may be arranged such that a separation distance between the first structure 320 and the second structure 320A may be maximized within the first space 330. The first space 330, which includes the center of the primary coil 400, may represent an effective available area that may be surrounded by the primary coil 400 without being intruded by the primary coil 400.

The first structure 320 and the second structure 320A may be arranged symmetrically with respect to the center of the primary coil 400.

The first structure 320 and the second structure 320A may protrude in a third axis direction by more than a first reference value.

The first reference value may be a height of the first structure 320 or the second structure 320A enabling to achieve a target ratio of a coupling coefficient k and may be selected from an allowable range for power transfer between the primary coil 400 and the secondary coil 500 at a frequency at which the wireless power transfer is performed.

Examples of the allowable range for power transfer, Z-gap may include 140 millimeters (mm), 175 mm, and 210 mm and so on. The allowable range of power transfer Z-gap may vary depending on a ground clearance range of the vehicle assembly (VA). For example, assuming that the ground clearance range of the vehicle assembly may have a value of 100-150 mm for Class Z1, 150-200 mm for Class Z2, and 200-250 mm for Class Z3, the allowable range of power transfer Z-gap may be set correspondingly to each class.

For example, the target ratio of the coupling coefficient k may be set to 70% at a frequency of 85 kiloHertz (kHz).

For example, the first reference value may be 50 mm at the frequency of 85 kHz.

The first structure 320 and the second structure 320A may have a width in a second axis direction greater than or equal to a second reference value.

The second reference value may be a width in a Y-axis direction of the first structure 320 and the second structure 320A enabling to achieve the target ratio of the coupling coefficient k and may be selected from an allowable range of the separation distance between centers of the primary coil 400 and the secondary coil 500 on an XY-plane. The second reference value may also be interpreted as a reference value for a thickness of the wall-shaped structure.

For example, the allowable range of the separation distance may be 75 mm for an offset in the X-axis direction and 100 mm for an offset in the Y-axis direction.

For example, the target ratio of the coupling coefficient k may be set to 70% at the frequency of 85 kHz.

For example, the second reference value may be 25 mm at the frequency of 85 kHz.

Alternatively, the second reference value may be 50 mm at the frequency of 85 kHz.

The primary coil 400 may be arranged to surround the first structure 320 and the second structure 320A and have a predetermined height in the third axis direction. In this case, the predetermined height may be an even height.

According to the wireless power transfer, energy is transferred using RF signals, lasers, sound waves, and so on instead of transferring the electric energy through conductive wires.

The inductive wireless power transfer is a kind of wireless power transfer technologies for transferring the energy through magnetic induction occurring between coils and is suitable for transferring high electric power to charge a large-capacity battery in an electric vehicle, for example.

An inductive wireless power transfer system includes a transmission coil (i.e., primary coil) and a reception coil (i.e., secondary coil), and a matching circuit may be incorporated to resonate the transmission coil and the reception coil at the same frequency and increase a power transfer efficiency.

Although the inductive wireless power transfer system has a very simple configuration, the system has a limited degree of freedom in terms of the power transfer distance between the coils and the alignment between the coils.

The present disclosure provides the magnetic structure that may reduce a performance degradation caused by deviations in the power transfer distance between the transmission coil and the reception coil and the alignment between the coils in the inductive wireless power transfer system for electric vehicles.

According to an inductive wireless power transfer system for electric vehicles according to an exemplary embodiment of the present disclosure, the magnetic structure may compensate for deviations in the power transfer distance between the primary coil 400 and the secondary coil 500 and the alignment between the coils so that the power may be transferred efficiently from the primary coil 400 to the secondary coil 500.

The magnetic structure according to an exemplary embodiment of the present disclosure may increase the degree of freedom in terms of the power transfer distance between the primary coil 400 and the secondary coil 500 and the alignment between the coils.

In the magnetic structure according to an exemplary embodiment of the present disclosure, the magnetic core having two wall-shaped structures 320 and 320A are disposed in the space surrounded by the primary coil 400 to adjust the mutual inductance and the coupling coefficient of the coils so that the power transfer efficiency may be improved even in the misaligned state.

According to an exemplary embodiment of the present disclosure, the magnetic core having the wall-shaped structures 320 and 320A is disposed at a maximum available misalignment position to increase the coupling coefficient at misaligned positions without reducing the coupling coefficient at an aligned position, so that the power transfer efficiency is improved at various misaligned positions within the maximum available misalignment range.

An exemplary embodiment of the present disclosure provides the wireless power transfer (WPT) device 21 having an optimized arrangement of the novel magnetic core structure and exhibiting an enhanced power transfer efficiency, and a wireless power transfer method using the wireless power transfer device.

According to another embodiment of the present disclosure, the center of the primary coil 400 and the center of the secondary coil 500 do not necessarily have to coincide horizontally with the same XY coordinates. Even if the XY coordinates of the center of the primary coil and the center of the secondary coil do not coincide with each other, electric power may be wirelessly transferred from the primary coil 400 to the secondary coil 500. Nonetheless, however, it may be suggested so that the center of the secondary coil be aligned with the center of the primary coil since a serious misalignment of the centers may significantly reduce the efficiency of the wireless power transfer.

In addition, differences in the XY coordinates between the center of the primary coil and the center of the secondary coil may be smaller than a predetermined reference value to ensure a desired efficiency of the wireless power transfer.

For example, a surface vehicle standard SAE J2954 directed to wireless power transfer for light-duty plug-in/electric vehicles and alignment methodology specifies maximum tolerances in alignment offsets in the XY plane between the center of the primary coil 400 and the center of the secondary coil 500 as ±75 mm in ta short axis (X-axis) direction and ±100 mm in a long axis (Y-axis) direction.

Generally, when the center of the primary coil 400 and the center of the secondary coil 500 are spaced apart, i.e. the coils are misaligned, the power transfer efficiency may be lower than when the center of the primary coil 400 and the center of the secondary coil 500 are aligned.

Generally, magnetic flux or magnetic field at a boundary of the first space 330 which is an effective internal space surrounded by the primary coil 400 and including the center of the primary coil 400 may be much smaller than the magnetic flux or magnetic field at the center, and thus the coupling coefficient and the power transfer efficiency may decrease as a misalignment distance between the primary coil and the secondary coil increases. Generally, when the center of the primary coil 400 and the center of the secondary coil 500 are separated by the maximum tolerance in alignment offset in the long axis (Y-axis) direction, the power transfer efficiency may be lowered significantly.

The magnetic core structure according to an exemplary embodiment of the present disclosure may can overcome the problem of the conventional magnetic structure that the magnetic flux rapidly decreases near the boundary of the first space 330.

According to an exemplary embodiment of the present disclosure, the magnetic flux contributing to the power transfer may be maintained even at boundaries at both ends of the first space 330, and the coupling coefficient between the coils and the power transfer efficiency may be improved.

The magnetic core structure according to an exemplary embodiment of the present disclosure may exhibit robust magnetic characteristics against the misalignment offset between the primary coil and the secondary coil coils and may improve the power transfer efficiency. The characteristics of robust power transfer efficiency against the misalignment offset between the coils may stem from the feature that the coupling coefficient k may be larger than the reference value near the boundaries at both ends in the long axis (Y-axis) direction of the first space 330.

In an exemplary embodiment of the present disclosure, when the maximum tolerance in alignment offset in the long axis direction is larger than the tolerance in alignment offset in the short axis direction, the primary coil may have a structure wound in a rectangular cross section of which length in the long-axis direction is larger than the length in the short-axis direction.

The decrease in the power transfer efficiency caused by the separation distance between the centers of the coils may be compensated for by employing a magnetic core structure having a protrusion in an empty space on a magnetic plate disposed between the primary coil and a shield plate. Such a structure, however, has a drawback that the coupling coefficient and the power transfer efficiency are decreasing when the centers of the coils are misaligned by the amount of the maximum tolerance in alignment offset even though showing a high coupling coefficient and a high power transfer efficiency when the primary coil 400 and the secondary coil 500 are aligned at the centers of the coils.

In an exemplary embodiment of the present disclosure, a compensating magnetic core structure which is a modification of a conventional magnetic core may be arranged to be surrounded by the primary coil 400. According to an exemplary embodiment, the two wall-shaped magnetic structures 320 and 320A may be arranged in a certain location where the magnetic flux may affect the decrease in the power transfer efficiency unlike the conventional transformer in which the magnetic core having a single structure occupies most of the internal space of the coil.

Generally, when a magnetic core is inserted into a coil, the core is magnetized and the magnetic flux around the core is strengthened and the coupling coefficient between the coils is increased.

When the magnetic core having a single structure occupies most of the internal space of the coil, the coupling coefficient between the coils increases, but the difference in the coupling coefficient becomes large between a case where the coils are aligned to each other in their centers and a case where the centers of the primary coil and the secondary coil are separated from each other by the maximum tolerance in alignment offset.

An exemplary embodiment of the present disclosure provides the magnetic core structure robust to the misalignment distance as a modification of the conventional magnetic core to address the reduction in the power transfer efficiency caused by the difference in the coupling coefficient.

The wall-shaped magnetic core structures 320 and 320A according to an exemplary embodiment of the present disclosure, which is elongated in the short-axis direction of the rectangular coil, may strengthen the magnetic flux around the core to increase the coupling coefficient between the coils when the centers of the primary coil and the secondary coil are located spaced apart significantly, e.g., by the amount of the maximum tolerance in alignment offset. The coupling coefficient in the empty space in the central space inside the coil where the core structure is not positioned may be maintained uniformly by adjusting thicknesses of the magnetic core structures. As a result, the exemplary embodiment of the present disclosure may enhance a uniformity of the coupling coefficient according to the misalignment distance.

The wall-shaped magnetic core structures 320 and 320A according to an exemplary embodiment of the present disclosure may be applicable to any loop-shaped wireless power transfer coils, and may increase the uniformity of the coupling coefficient without the loss of the coupling coefficient by varying a height and thickness of the core structure depending on the structure of the coil.

Referring to FIG. 7, it is assumed that the primary coil 400 has a substantially rectangular horizontal cross section. The edges of the primary coil 400 may be rounded.

According to an exemplary embodiment of the present disclosure, the primary coil 400 and the secondary coil 500 may have the substantially rectangular cross section in which the length in the long-axis direction is larger than the length in the short-axis direction.

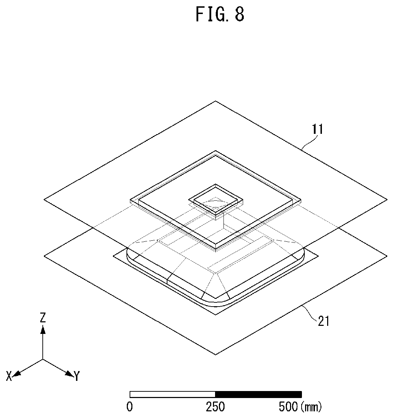

FIG. 8 is a perspective view illustrating the power transmission pad 21 and the power reception pad 11 including the magnetic core structure 320 and 320A according to another exemplary embodiment of the present disclosure.

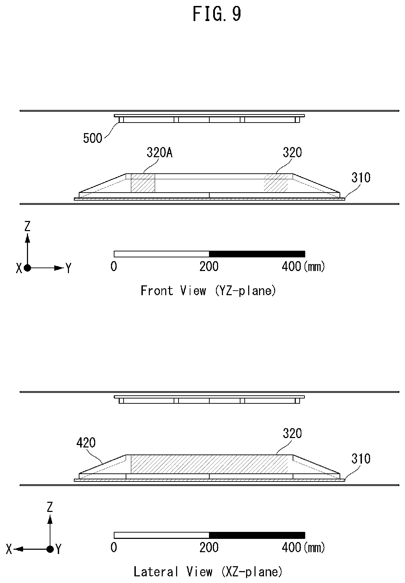

FIG. 9 is a front view and a lateral view illustrating the power transmission pad 21 and the power reception pad 11 including the magnetic core structure 320 and 320A according to another exemplary embodiment of the present disclosure.

Referring to FIGS. 8 and 9, a primary coil 420, which surrounds the first structure 320 and the second structure 320A, may generally include a primary coil wire wound by one or more turns, and may generally have a shape of a truncated pyramid in which, the closer to the center of the primary coil 420, the higher in the third axis direction each turn of the primary coil wire may be located.

Descriptions of configurations shown in FIGS. 8 and 9 duplicated with the configurations shown in FIGS. 5-7 are omitted for simplicity.

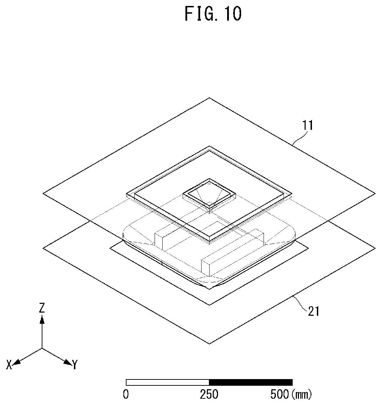

FIG. 10 is a perspective view illustrating the power transmission pad 21 and the power reception pad 11 including the magnetic core structure 320 and 320A according to yet another exemplary embodiment of the present disclosure.

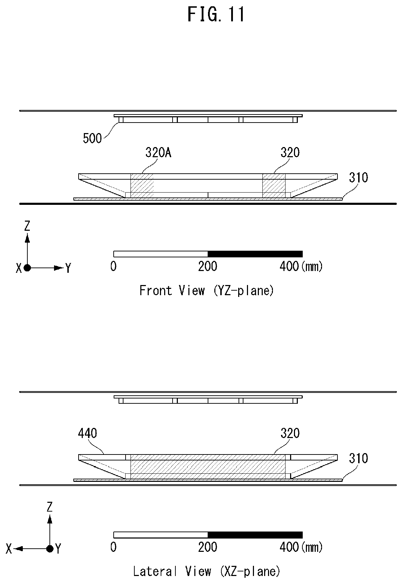

FIG. 11 is a front view and a lateral view illustrating the power transmission pad 21 and the power reception pad 11 including the magnetic core structure 320 and 320A according to yet another exemplary embodiment of the present disclosure.

Referring to FIGS. 10 and 11, a primary coil 440, which surrounds the first structure 320 and the second structure 320A, may generally include a primary coil wire wound by one or more turns, and may generally have a shape of an inverted truncated pyramid in which, the closer to the center of the primary coil 440, the lower in the third axis direction each turn of the primary coil wire may be located.

Descriptions of configurations shown in FIGS. 10 and 11 duplicated with the configurations shown in FIGS. 5-7 are omitted for simplicity.

In the exemplary embodiments shown in FIGS. 5-11, the coils 400 and 500 may be may be implemented by flat wires. Each of the coils may be formed with the flat wire wound by one or more turns.

Alternatively, the coils 400 and 500 in the exemplary embodiments shown in FIGS. 5-11 may be implemented by litz wires. Each of the coils may be formed with the litz wire wound by one or more turns.

Compared with a regular copper wire, the litz wire is advantageous in that the current flow does not become unstable with the increase in the current, losses are small so that a stable current flow may be maintained, and the temperature of the coil rises less. Therefore, the litz wire is an appropriate material for the electric vehicle wireless power transfer system using an operating frequency of 79 to 90 kHz. Generally, the price of the litz wire is set at a price per meter. There are attempts to use the litz wire in the electric vehicle wireless power transfer system taking such characteristics of the litz wire into account.

However, the wireless power transfer system for the light-duty electric vehicle requires the litz wire with a large current capacity (e.g., at least 50A or larger), which is dozens of times more expensive than a general litz wire and may cause an increase in the manufacturing cost of the electric vehicle.

Because the electric vehicle wireless charging system transfers large amounts of electric power wirelessly, strict heat management is always important. In addition, it is important to manage the heating of foreign objects such as metal.

However, due to the structure of the litz wire in which inner strands are surrounded by outer strands, it may be difficult to quickly discharge the generated heat to the outside of the litz wire. In addition, as the heat generation continues, the current loss in the litz wire increases. Therefore, it may be difficult to use the litz wire for a long period of time. As a result, the power transfer system using the litz wire needs a cooling arrangement, which increases the cost further.

Even if a cooling arrangement is added to the system, a thermal conductivity of the litz wire may be too low to quickly discharge the generated heat to the outside of the litz wire, and thus an overall cooling efficiency may be still low.

In addition, there may be some views to be considered that a supporting structure maintaining a shape of the coil made of the litz wire may impair the safety of the system.

Although the litz wire has a strength higher than the regular copper wire and facilitates to maintain a shape of the wire, the litz wire is linear-shaped, and a coil made of the litz wire may need a frame to maintain the shape of the litz wire and the coil. Such a frame is made of a dielectric with a low dielectric constant to reduce an electromagnetic influence on the operation of the coil. The dielectric with a low dielectric constant is generally vulnerable to heat, and thus is inadequate to use for a high-power charging at 22 Kilowatts (KW), for example, which generates a lot of heat. Additionally, because the frame is in contact with the litz wire, the frame may hinder a heat exchange, undergo a change in its shape during repeated heating and cooling processes, or cause a fire.

Therefore, the present disclosure provides an alternative example in addition to the example using the litz wire. The wireless power transmission pad or the power reception pad according to an embodiment of the present disclosure may be implemented using a flat wire.

The flat and rectangular wire according to an exemplary embodiment of the present disclosure may be a modification of a commercially available flat wire to adapt to the purpose of the present disclosure.

Flat wires available on the market generally have corners that are almost right-angled. These commercially available flat wires are used to increase a space factor. A wire according to an alternative example of the present disclosure maintains its flat shape has corners that are at least partially rounded.

The wire proposed by the present disclosure has characteristics of 1) having a flat or planar shape, and 2) having sides that are partially round and/or partially rectangular. The wire according to the example of the present disclosure having such characteristics, in a state of being wound in a coil, may be a flat wire having a shape optimized to generate an electromagnetic field suitable for the wireless power transfer.

Flat and rectangular wires may be available in various sizes, for example, single or multiple strands (e.g., eight strands), thickness ranges of 1.0-1.9 millimeters (mm), and widths ranges of 3-20 mm. In addition, the rectangular wire can be wound into a coil of a continuously transposed conductor (CTC) form.

The advantage of the coil made of such a wire is that it can be used for a high voltage application, and the conductor adhesion of insulating material to the conductor is excellent enough to select and use one of diverse insulating materials such as KRAFT, THERMAL UPGRADE KRAFT, NOMEX, DENNISON, KAPTON, MICA, and CONDUCTOFOL.

If an insulation issue is solved in this way, the number of turns may be increased compared to the existing the litz wire coil, and an increase in the number of turns may enable to establish an increased magnetic flux and enhance a power transfer efficiency.

In addition, because it is essentially a single cylindrical metal structure when observed from outside, heat may be transferred quickly from the inside to the outside without any discontinuities.

Further, the litz wire has a structure that inner strands are surrounded by outer strands as mentioned above. Thus, when an internal short circuit or insulation deformation or deterioration occurs, it may be difficult to identify a location of a trouble, and partial maintenance of the wire may be impossible and the entire coil has to be replaced, which leads to an increase in maintenance costs. However, the coil structure employing the flat wire or the planar wire proposed in the present disclosure is more durable than the litz wire, and thus the troubles such as the short circuit in the wire are less likely to occur. Further, even if a trouble occurs, the location where the trouble occurred may be identified easily. Therefore, it may be possible to immediately fix the trouble, and even if the coil itself is replaced, the replacement cost is low. As a consequence, the coil structure according to the present disclosure requires much less resources for the maintenance.

In addition, the use of the flat wire structure has the advantage of a high heat transfer efficiency as well as a high freedom of arrangement, which enables to selectively apply various cooling techniques such as dry self-cooling, dry wind cooling, dry sealed self-cooling, inflow self-cooling, inflow wind cooling, inflow wind cooling, oil-flowing water cooling, oil-flowing wind cooling, and refrigerant cooling. Since various cooling techniques may be applied selectively or in combination, embodiment(s) of the present disclosure can have a very advantageous effect in cooling the heat generated during the power transfer.

The flat wire according to an exemplary embodiment of the present disclosure may be implemented using at least one material selected from copper and copper alloy, but the scope of the present disclosure is not limited thereto, and various conductors may be used for the flat wire as well.

Meanwhile, it may be advantageous for establishing an electromagnetic field near the coils to round the corners of the coil at least partially. A curvature at which the corners are rounded may also be determined taking into account the power transfer efficiency, the shape of the coil, and so on.

In an example, the coil structure 400 or 500 according to an exemplary embodiment of the present disclosure may be implemented, based on a shape and material of a bus bar forming a conductor connected to the battery inside the electric vehicle 10, by determining an aspect ratio of a cross section of the wire and a numerical range of a curvature of the rounded corner.

Comparing the example employing the litz wire with the alternative example, although the litz wire is a technology designed to increase the ratio of surface area i.e., current path, to the cross sectional area or volume, interferences between the strands of the litz wire in a central space of the litz wire bundles where the strands are dense may reduce the power transfer efficiency and increase the generation of heat.

Since the current flows through a surface of the conductor, the ratio of the surface area to the cross sectional area may be understood to correspond to the ratio of the current path to the total volume.

Examples of the present disclosure may increase the ratio of the surface area to the cross sectional area and improve the space factor by proposing the coil structure using the flat wire, thereby improving the power transfer efficiency.

The rounded corners may contribute to the formation of electromagnetic fields, resulting in more advantageous electromagnetic characteristics of the coil.

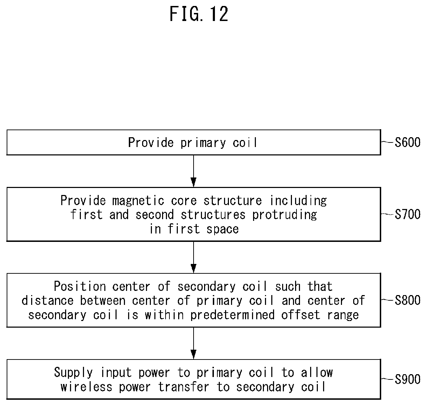

FIG. 12 is a flowchart conceptually illustrating a wireless power transfer method according to an exemplary embodiment of the present disclosure.

The wireless power transfer method shown in FIG. 12 may correspond to the embodiments shown in FIGS. 5-11.

The wireless power transfer method according to an exemplary embodiment of the present disclosure, which is a method of wirelessly transferring electric power from the transmission pad 21 including the primary coil 400 to the reception pad 11 including the secondary coil 500, includes: an operation S700 of providing a magnetic core structure including a first magnetic structure 320 configured to protrude within a first space 330 including a center of the primary coil 400 and extend in a first axis direction, and a second magnetic structure 320A spaced apart from the first magnetic structure 320 in a second axis direction and configured to protrude in the same direction as the protrusion direction of the first magnetic structure 320 and extend in the first axis direction; an operation S800 of positioning the center of the secondary coil 500 within a predetermined offset range from the center of the primary coil 400; and an operation S900 of supplying input power to the primary coil 400 and allowing to be wirelessly transferred to the secondary coil 500.

In the operation S700 of providing the magnetic core structure, the first magnetic structure 320 and the second magnetic structure 320A may be arranged to protrude in the third axis direction by more than the first reference value.

The wireless power transfer method according to an exemplary embodiment of the present disclosure may further include an operation S600 of providing the primary coil 400 surrounding the first magnetic structure 320 and the second magnetic structure 320A.

Referring to the embodiments of FIGS. 5-7, in the operation S600, the primary coil 400 may be arranged to have a predetermined height in the third axis direction. In this case, the predetermined height may be an even height.

Referring to the embodiments of FIGS. 8 and 9, in the operation S600, the primary coil 420 may be arranged to generally have a shape of a truncated pyramid in which, the closer to the center of the primary coil 420, the higher in the third axis direction each turn of the primary coil wire may be located.

Referring to the embodiments of FIGS. 10 and 11, the primary coil 440 may be arranged to generally have a shape of an inverted truncated pyramid in which, the closer to the center of the primary coil 440, the lower in the third axis direction each turn of the primary coil wire may be located.

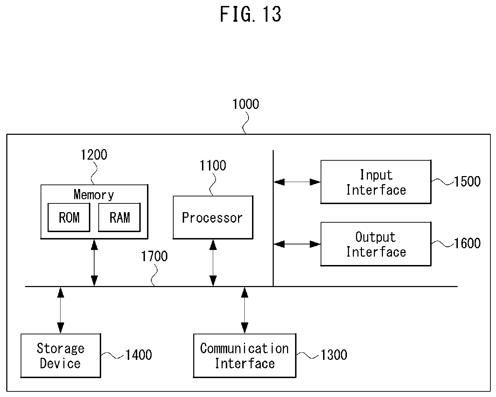

FIG. 13 is a block diagram illustrating a generalized configuration of hardware included in the wireless power transmission pad and/or the wireless power reception pad or associated with the wireless power transmission pad and/or the wireless power reception pad to control a sequence for the wireless power transfer.

For convenience of explanation, the hardware controlling the sequence for the wireless power transfer may be referred to as a controller 1000.

The controller 1000 may be disposed on a side of the electric vehicle 100, on a side of the electric vehicle supply equipment (EVSE), or on a side of the power transmission pad 21.

The controller 1000 may include at least one processor 1100, a memory 1200 storing at least one instruction for performing the operations described above through the processor 1100, and a communication interface 1300 connected to a network to perform communications. The controller 1000 for wireless power transfer may further include a storage device 1400 capable of storing the at least one instruction for performing the operations described above or data generated during the execution of the instruction. The controller 1000 for wireless power transfer may further include an input interface 1500 and an output interface 1600 for interactions with a user. The components of the controller 1000 for wireless power transfer may be connected to each other by a system bus 3700 to communicate with each other.

The controller or computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100 may include a central processing unit (CPU) or a graphics processing unit (GPU) or may be implemented by another kind of dedicated processor suitable for performing the method of the present disclosure.

Each of the memory 1200 and the storage device 1400 may be comprised of at least one of a volatile storage medium and a non-volatile storage medium. For example, the memory 1200 may be comprised of at least one of a read only memory (ROM) and a random access memory (RAM).

Here, the at least one instruction may include at least one of: a sequence suitable for identifying at least one of the electric vehicle 10, the electric vehicle supply equipment (EVSE) 20, and the power transmission pad 21, a sequence suitable for associating two or more devices among the electric vehicle 10, the electric vehicle supply equipment (EVSE) 20, the power transmission pad 21 through wireless communications, a sequence suitable for performing the alignment and/or the pairing through a positioning of a counterpart device, and a sequence suitable for allowing to supply an alternating current power for the power transfer after the alignment and/or the pairing.

Additionally, the controller 1000 may include the communication interface 1300 that performs communications through a wireless communication network.

Additionally, the controller 1000 may further include the storage device 1400, the input interface 1500, and the output interface 1600.

The components of the controller 1000 may be connected to each other by the system bus 1700 to communicate with each other.

The controller 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

### INDUSTRIAL APPLICABILITY

An exemplary embodiment of the present disclosure provides a magnetic structure enabling an efficient power transfer in the inductive wireless power transfer system for electric vehicles by reducing a performance degradation that may be caused by deviations in the power transfer distance between the primary coil and the secondary coil and an alignment between the coils.

## Claims

1. A magnetic core structure provided with a primary coil for wireless power transfer (WPT), comprising:
a first structure configured to protrude in a first space including a center of the primary coil and extend in a first axis direction;
a second structure spaced apart from the first structure in a second axis direction and configured to protrude in a same direction as the first structure and extend in the first axis direction; and
a support structure configured to support the first structure and the second structure and having a same magnetic property as the first structure and the second structure.

2. The magnetic core structure as claimed in claim 1, wherein the first structure and the second structure are arranged such that a separation distance between the first structure and the second structure is maximized within the first space.

3. The magnetic core structure as claimed in claim 1, wherein the first structure and the second structure are arranged symmetrically with respect to a center of the primary coil.

4. The magnetic core structure as claimed in claim 1, wherein the first structure and the second structure are configured to protrude in a third axis direction by more than a first reference value.

5. The magnetic core structure as claimed in claim 4, wherein the first reference value is 50 mm.

6. The magnetic core structure as claimed in claim 1, wherein the first structure and the second structure have a width in a second axis direction greater than or equal to a second reference value.

7. The magnetic core structure as claimed in claim 6, wherein the second reference value is 25 mm.

8. The magnetic core structure as claimed in claim 1, wherein the primary coil is arranged to surround the first structure and the second structure and includes a primary coil wire wound by one or more turns have a predetermined height in a third axis direction.

9. The magnetic core structure as claimed in claim 1, wherein the primary coil is arranged to surround the first structure and the second structure and includes a primary coil wire wound by one or more turns wherein, the closer to the center of the primary coil, the higher in a third axis direction a turn of the primary coil wire is located.

10. The magnetic core structure as claimed in claim 1, wherein the primary coil is arranged to surround the first structure and the second structure and includes a primary coil wire wound by one or more turns wherein, the closer to the center of the primary coil, the lower in a third axis direction a turn of the primary coil wire is located.

11. A wireless power transfer device provided to transmit power wirelessly to a reception pad including a secondary coil, comprising:
a primary coil;
a first magnetic structure configured to protrude in a first space including a center of the primary coil and extend in a first axis direction;
a second magnetic structure spaced apart from the first magnetic structure in a second axis direction and configured to protrude in a same direction as the first magnetic structure and extend in the first axis direction;
a support magnetic structure configured to support the first magnetic structure and the second magnetic structure and having a same magnetic property as the first magnetic structure and the second magnetic structure; and
a housing configured to support the primary coil, the first magnetic structure, the second magnetic structure, and the support magnetic structure.

12. The wireless power transfer device as claimed in claim 11, wherein the first magnetic structure and the second magnetic structure are arranged such that a separation distance between the first magnetic structure and the second magnetic structure is maximized within the first space.

13. The wireless power transfer device as claimed in claim 11, wherein the first magnetic structure and the second magnetic structure are arranged symmetrically with respect to a center of the primary coil.

14. The wireless power transfer device as claimed in claim 11, wherein the first magnetic structure and the second magnetic structure are configured to protrude in a third axis direction by more than a first reference value.

15. The wireless power transfer device as claimed in claim 11, wherein the first magnetic structure and the second magnetic structure have a width in a second axis direction greater than or equal to a second reference value.

16. A method of wirelessly transmitting power from a transmission pad including a primary coil to a reception pad including a secondary coil, comprising:
providing a magnetic core structure comprising a first magnetic structure configured to protrude within a first space including a center of the primary coil and extend in a first axis direction, and a second magnetic structure spaced apart from the first magnetic structure in a second axis direction and configured to protrude in the same direction as the first magnetic structure and extend in the first axis direction;
positioning a center of the secondary coil within a predetermined offset range from the center of the primary coil; and
supplying input power to the primary coil and allowing to be wirelessly transferred to the secondary coil.

17. The method of claim 16, wherein the first magnetic structure and the second magnetic structure are configured to protrude in a third axis direction by more than a first reference value.

18. The method of claim 16, further comprising:
providing the primary coil surrounding the first magnetic structure and the second magnetic structure and including a primary coil wire wound by one or more turns having a predetermined height in a third axis direction.

19. The method of claim 16, further comprising:
providing the primary coil surrounding the first magnetic structure and the second magnetic structure and including a primary coil wire wound by one or more turns the closer to the center of the primary coil, the higher in a third axis direction a turn of the primary coil wire is located.

20. The method of claim 16, further comprising:
providing the primary coil surrounding the first magnetic structure and the second magnetic structure and including a primary coil wire wound by one or more turns the closer to the center of the primary coil, the lower in a third axis direction a turn of the primary coil wire is located.
